# EUROPEAN PATENT APPLICATION

(11) **EP 4 704 403 A1**
(43) Date of publication of application: **04.03.2026**
(21) Application number: 24796135.2
(22) Date of filing: 24.04.2024
(51) Int. Cl.: H04L 51/18

(54) **ASSOCIATION RELATIONSHIP ESTABLISHMENT METHOD AND APPARATUS, DEVICE, STORAGE MEDIUM, AND PROGRAM PRODUCT**

(30) Priority: 26.04.2023 CN 202310464944
(71) Applicant: Beijing Zitiao Network Technology Co., Ltd., Beijing 100190 (CN)
(72) Inventor: OUYANG, Bingjie, Beijing 100028 (CN); YIN, Yan, Beijing 100028 (CN); LI, Xinyi, Beijing 100028 (CN)
(74) Representative: Grünecker Patent- und Rechtsanwälte PartG mbB
(86) International application number: PCT/CN2024/089657
(87) International publication number: WO 2024/222759

(57) **Abstract**

The present disclosure relates to method, apparatus, device, storage medium and program product for association relationship establishment. The method comprises displaying a relationship establishment interface, wherein the relationship establishment interface comprises an identification pattern of a first user for a second user to scan to establish a first association relationship between the second user and the first user; after the first association relationship established between the second user and the first user, determining whether a predetermined follow-back condition is satisfied; and if the predetermined follow-back condition is satisfied, establishing a second association relationship between the first user and the second user, wherein the predetermined follow-back condition being satisfied comprises a follow-back function corresponding to the relationship establishment interface being in an on state, and/or a current displaying interface of the first user being the relationship establishment interface.

## Description

This application claims the benefit of Chinese Patent Application No. 2023104649443, filed on April 26, 2023, entitled "Method, Apparatus, Device, Storage medium and Program Product for Association Relationship Establishment," the entire contents of which are incorporated herein by reference.

### FIELD

The present disclosure relates to the field of computer processing technologies, and in particular, to method, apparatus, device, storage medium and program product for association relationship establishment.

### BACKGROUND

With continuous developments of Internet technologies, many applications have been come up. With continuous developments of computer technologies, social applications gradually permeate into people's daily lives, and people may interact with others in a social application, for example, establishing an association relationship, chatting, sharing media content, and the like.

### SUMMARY

Embodiments of the present disclosure provide a method, apparatus, device, a storage medium and a program product for association relationship establishment, steps of establishing association relationship are reduced, and establishment efficiency of the association relationship is improved.

According to a first aspect, embodiments of the present disclosure provide a method for establishing an association relationship, including:
displaying a relationship establishment interface, wherein the relationship establishment interface comprises an identification pattern of a first user for a second user to scan to establish a first association relationship between the second user and the first user;
in response to determining that an establishment of the first association relationship between the second user and the first user is complemented by the second user, determining whether a predetermined follow-back condition is satisfied;
in response to determining that the predetermined follow-back condition is satisfied, triggering to establish a second association relationship between the first user and the second user, wherein the predetermined follow-back condition being satisfied comprises: a follow-back function corresponding to the relationship establishment interface being in an on state, and/or a current displaying interface of the first user being the relationship establishment interface.

According to a second aspect, embodiments of the present disclosure provide an apparatus for association relationship establishment, including:
an interface displaying module configured to display a relationship establishment interface, wherein the relationship establishment interface comprises an identification pattern of a first user for a second user to scan to establish a first association relationship between the second user and the first user;
a follow-back condition confirmation module configured to in response to determining that an establishment of the first association relationship between the second user and the first user is completed by the second user, determine whether a predetermined follow-back condition is satisfied;
a second association relationship establishment module configured to trigger to establish a second association relationship between the first user and the second user in response to determining that the predetermined follow-back condition is satisfied, wherein the predetermined follow-back condition being satisfied comprises: a follow-back function corresponding to the relationship establishment interface being in an on state, and/or a current displaying interface of the first user being the relationship establishment interface.

According to a third aspect, embodiments of the present disclosure provide an electronic device, including:
one or more processors;
a storage device, configured to store one or more programs;
when the one or more programs are executed by the one or more processors, the one or more processors implement the association relationship establishment method according to any one of the first aspect.

According to a fourth aspect, an embodiment of the present disclosure provides a computer-readable storage medium, where a computer program is stored, and when the program is executed by a processor, the association relationship establishment method according to any one of the first aspect is implemented.

According to a fifth aspect, an embodiment of the present disclosure provides a computer program product, where the computer program product includes a computer program or an instruction, and when the computer program or the instruction is executed by a processor, the association relationship establishment method according to any one of the first aspect is implemented.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and elements and elements are not necessarily drawn to scale.
FIG. 1 is a schematic diagram of a scenario of an association relationship establishment method according to embodiments of the present disclosure;
FIG. 2 is a schematic flowchart of a method for establishing an association relationship according to embodiments of the present disclosure;
FIG. 3a is a schematic diagram of a relationship establishment interface according to embodiments of the present disclosure;
FIG. 3b is a schematic diagram of a relationship establishment interface according to embodiments of the present disclosure;
FIG. 4 is a schematic diagram of a relationship establishment interface according to embodiments of the present disclosure;
FIG. 5 is a schematic diagram of a relationship establishment interface according to embodiments of the present disclosure;
FIG. 6 is a schematic diagram of a relationship establishment interface according to embodiments of the present disclosure;
FIG. 7 is a schematic diagram of a relationship establishment interface according to embodiment of the present disclosure;
FIG. 8 is a schematic structural diagram of an apparatus for establishing an association relationship according to embodiments of the present disclosure;
FIG. 9 is a schematic structural diagram of an electronic device according to embodiments of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein, and vice versa. It should be understood that the drawings and embodiments of the present disclosure are for exemplary purposes only and are not intended to limit the scope of the present disclosure.

It should be understood that the steps recited in the method embodiments of the present disclosure may be performed in different orders, and / or in parallel. Further, the method embodiments may include additional steps and/or omit performing the illustrated steps. The scope of the present disclosure is not limited in this respect.

As used herein, the term "comprising" and variations thereof are open-ended, i.e., "including but not limited to". The term "based on" is "based at least in part on". The term "one embodiment" means "at least one embodiment". The term "another embodiment" means "at least one further embodiment". The term "some embodiments" means "at least some embodiments". The relevant definitions of other terms will be given below.

It should be noted that the concepts such as "first" and "second" mentioned in this disclosure are merely used to distinguish different apparatuses, modules, or units, and are not intended to limit the order of functions performed by the apparatuses, modules, or units or the mutual dependency association relationship.

It should be noted that the modification of "one" and "a plurality" mentioned in this disclosure is illustrative and not limiting, and those skilled in the art should understand that "one or more" should be understood unless the context clearly indicates otherwise.

The names of messages or information exchanged between multiple devices in embodiments of the present disclosure are for illustrative purposes only and are not intended to limit the scope of such messages or information.

Before embodiments of the present disclosure are described in further detail, the terms and terms involved in embodiments of the present disclosure are described, and the terms and terms involved in embodiments of the present disclosure are applicable to the following explanations.

In response to is used to represent a condition or state on which the executed operation depends, when the dependent condition or state is satisfied, the one or more operations performed may be real-time, or may have a setting delay. Without special description, there is no limitation on the execution order of the plurality of operations performed.

It can be understood that, before the technical solutions disclosed in embodiments of the present disclosure are used, the types of personal information related to the present disclosure, the usage scope, the usage scenario and the like should be notified to the user in an appropriate manner according to relevant laws and regulations and obtain the authorization of the user.

For example, in response to receiving an active request from a user, prompt information is sent to the user to explicitly prompt the user that the requested operation will need to acquire and use the personal information of the user. Therefore, the user can autonomously select whether to provide personal information to software or hardware executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device. It may be understood that the foregoing notification and obtaining a user authorization process is merely illustrative, and does not constitute a limitation on implementations of the present disclosure, and other manners of meeting related laws and regulations may also be applied to implementations of the present disclosure.

It may be understood that data involved in the technical solution (including but not limited to the data itself, the acquisition or use of the data) should follow the requirements of corresponding laws and regulations and related regulations.

With the continuous developments of Internet technologies, many applications have been come up. With the continuous developments of computer technologies, social applications gradually permeate into people's daily lives, and people may interact with others in a social application, for example, establishing an association relationship, chatting, and the like.

The association relationship generally includes a first association relationship and a second association relationship. Specifically, the first association relationship may be an association relationship that user A establishes a unilateral relationship to user B, and the second association relationship may be an association relationship that the user B establishes a unilateral relationship to the user A. Specifically, the first association relationship may be that the user A follows the user B, but the user B does not follow the user A. The second association relationship may be that the user B follows back the user A. That is, after the user A follows the user B, the user A and the user B become mutual following by the user B following back the user A.

In the related art, in a scenario of mutual following through code scanning, the process mainly includes: the user B opens its own quick response (QR) code b, the user A opens a code scanning function of the client and scans QR code b, the user A sends a first following request to the user B, the user A succeeds following the user B after the user B agrees with the first following request, but the user B does not follow the user A.

At this time, the follow-back process of the user B (the process of following the user A by the user B) may include various implementations. For example, in a first implementation, after the user B waits for a predetermined duration, the client automatically closes the QR code interface, or the user B manually closes the QR code interface, and opens a new friend interface in the client, where the new friend interface presents a follow-back control corresponding to the user A, and after the user B triggers the follow-back control, the user B successfully follows the user A. In a second implementation, the user A opens its own QR code a, the user B scans QR code a, the user B sends a second following request to the user A, and after the user A agrees with the second following request, the user B successfully follows user A.

After the above follow-back procedure, the user A and the user B become mutual following relationship. However, in the foregoing scenario, the follow-back steps are lengthy and the follow-back efficiency is low.

To resolve the foregoing technical problem, embodiments of the present disclosure provide a method for establishing an association relationship, where the method includes: displaying a relationship establishment interface, where the relationship establishment interface includes an identification pattern of a first user, and the identification pattern is used by a second user to scan to establish a first association relationship between the second user and the first user; in response to determining that the second user completes an establishment of the first association relationship between the second user and the first user, determining whether a predetermined follow-back condition is satisfied; and in response to determining that the predetermined follow-back condition is satisfied, triggering to establish a second association relationship between the first user and the second user, where the predetermined follow-back condition being satisfied includes a follow-back function corresponding to the relationship establishment interface being in an on state, and/or a current displaying interface of the first user being the relationship establishment interface.

In some embodiments, the first user displays the identification pattern, and after the second user scans the identification pattern, the second user successfully follows the first user. At this time, whether the follow-back function of the first user being enabled is determined, whether a client display interface of the first user is the identification pattern interface. If two conditions are satisfied simultaneously, the first user follows back the second user. In embodiments of the present disclosure, if the conditions are satisfied, the first user automatically follows back the second user, the follow-back process is reduced, and the follow-back efficiency is improved.

The method for establishing the association relationship provided in embodiments of the present disclosure will be described in detail below with reference to embodiments and the accompanying drawings.

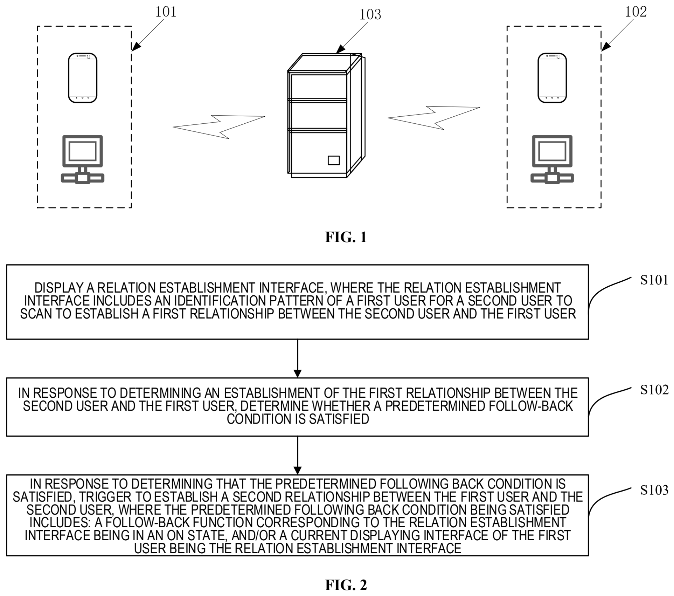

FIG. 1 is a schematic diagram of a system for establishing an association relationship according to embodiments of the present disclosure. As shown in FIG. 1, the system for establishing the association relationship includes a first terminal 101, a second terminal 102, and an application server 103.

In some embodiments, the first terminal 101 and the second terminal 102 may be devices, such as, a mobile phone, a computer, a tablet computer and the like. The application server 103 may be a separated server, a server group, or a cloud server, and each server in the server group is connected through a wired or wireless network. One server group may be centralized, for example, a data center, or may be distributed. The application server 103 may be local or remote. The application server 103 may communicate with the first terminal 101 and the second terminal 102 through a wired or wireless network, respectively. Embodiments of the present disclosure are not limited to hardware system and software system of the application server 103.

The first terminal 101 and the second terminal 102 may install the same application client, log in to the application client based on the user identifier, and establish a communication connection with the application server 103 through the application client, so as to interact with the application server 103.

In some embodiments, the first terminal 101 logs in the first application client by a first user identification, and the second terminal 102 logs in the second application client by a second user identification. The first user client displays the QR code identification in response to the operation of the first user, the second user client scans the QR code of the first user, the second user client sends a first association relationship establishment request to the application server, and the first association relationship establishment request is used to indicate that the second user establishes the first association relationship with the first user. After receiving the first association relationship establishment request, the application server 103 establishes the first association relationship between the second user and the first user, and returns a first association relationship establishment notification to the first terminal 101 and the second terminal 102. When the predetermined follow-back condition is satisfied, the first user client sends a second association relationship establishment request to the application server 103, where the second association relationship establishment request is used to indicate that the first user establishes the second association relationship with the second user. After receiving the second association relationship establishment request, the application server 103 establishes a second association relationship between the first user and the second user, and returns a second association relationship establishment notification to the first terminal 101 and the second terminal 102.

It may be understood that the first user client does not send the second association relationship establishment request to the application server 103 if the predetermined follow-back condition is not satisfied. That is, the first user and the second user will maintain the first association relationship.

FIG. 2 is a flowchart of a method for establishing an association relationship according to embodiments of the present disclosure, which may be implemented to a case where the association relationship is established by face-to-face code scanning. The method may be performed by an apparatus for association relationship establishment. The apparatus for association relationship establishment may be implemented in software and / or hardware, and the method for association relationship establishment may be performed by the user terminal 110 described in FIG. 1.

As shown in FIG. 2, a method for establishing the association relationship according to embodiments of the present disclosure mainly include steps S101-S103.

S101: Displaying a relationship establishment interface, where the relationship establishment interface includes an identification pattern of a first user. The identification pattern is used by a second user to scan to establish a first association relationship between the second user and the first user.

In some embodiments, the terminal is installed with an application client, and the application client may be logged in based on the user identification. The application client may be a client capable of interacting among different users, such as a social client, an instant messaging client, or an information sharing client having a chat function.

In some embodiments, taking the first terminal and the second terminal as an example, for ease of differentiation, an application client installed on the first terminal is referred to as a first application client, and an application client installed on the second terminal is referred to as a second application client. In addition, a user of the first terminal is referred to as a first user, and a user of the second terminal is referred to as a second user.

In one embodiment of the present disclosure, the relationship establishment interface is an interface for another user to establish an association relationship. If the first application client logged in by the first user identification displays a relationship establishment request interface including an identification pattern of the first user, the relationship establishment request interface is an interface for the second user to scan to establish the first association relationship between the second user and the first user.

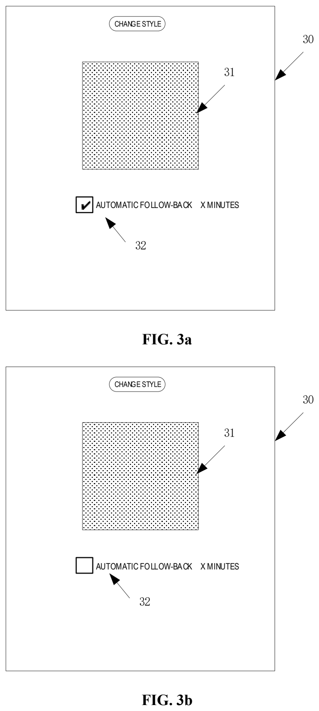

In some embodiments, the identification pattern of the first user may be used to carry identity information of the first user. After being scanned by the second user, the identification pattern may cause an establishment of the first association relationship between the second user and the first user. In some embodiments, the identification pattern may be a QR code, a barcode, or another pattern that may carry identification information. The identification pattern may be circular, square, or other irregular shapes, and the shape of the identification pattern is not specifically limited in embodiments of the present disclosure. As shown in FIG. 3a, an example in which the identification pattern 31 is a square QR code is used for description in embodiments of the present disclosure.

In one embodiment of the present disclosure, as shown in FIG. 3a, a style change control is included in the relationship establishment interface 30. In response to a trigger for the style change control, a display style of the identification pattern in the relationship establishment interface is changed, where changing the display style includes changing a color of the identification pattern and/or changing a shape of the identification pattern. Further, changing the display style further includes changing a background color of the relationship establishment interface.

In some embodiments, the first association relationship may be a unilateral association relationship. Further, the first association relationship may be a unilateral association relationship where the second user follows the first user.

In one embodiment of the present disclosure, in a scenario in which mutual following is by scanning the identification pattern, the relationship establishment interface is displayed in response to receiving an operation of the user for displaying identification pattern to establish the association relationship. Specifically, in a scenario of code scanning interaction, in response to receiving an operation of displaying the QR code by the first user, a relationship establishment interface is displayed, where the relationship establishment interface displays a QR code of the first user, and the QR code user is used by the second user to scan, so that the second user may follow the first user to establish the first association relationship, but after establishing the first association relationship, the first user does not follow the second user.

S102: Determining, in response to determining that the second user completes an establishment of the first association relationship between the second user and the first user, whether a predetermined follow-back condition is satisfied.

In some embodiments, the second user completes the first association relationship between the second user and the first user, which may be understood as that the second user has successfully followed the first user.

In an implementation of the present disclosure, after the second user scans the identification pattern of the first user, the second user sends a first association relationship establishment request to the application server. The first association relationship establishment request is used to indicate that the second user establishes the first association relationship with the first user. After receiving the first association relationship establishment request, the application server establishes the first association relationship between the second user and the first user, and returns a first association relationship establishment notification to the first user and the second user. The first association relationship establishment notification is used to indicate that the first association relationship between the second user and the first user has been established.

In one implementation of the present disclosure, after receiving the first association relationship establishment notification returned by the application server, the first user determines that the second user completes the establishment of the first association relationship between the second user and the first user.

In one implementation of the present disclosure, the predetermined follow-back condition may be understood as a condition that the first user may automatically follow back the second user on the basis that the second user successfully follows the first user.

In one implementation of the present disclosure, the predetermined follow-back condition includes: a follow-back function corresponding to the relationship establishment interface is in an on state. In some embodiments, the state of the follow-back function includes an on state and an off state. When the follow-back function of the first user is in the on state, on the basis that the second user successfully follows the first user, the first user may automatically follow back the second user. When the follow-back function of the relationship establishment interface of the first user is in the off state, on the basis that the second user successfully follows the first user, the first user cannot automatically follow back the second user, that is, the first user and the second user will only maintain the first association relationship without establishing the second association relationship.

In implementations of the present disclosure, the first user may set whether to follow back a follower of the user in a scanning interface (i.e., relationship establishment interface). It may be understood that the follow-back function corresponding to the relationship establishment interface indicates that the first user turns on the automatic follow-back function when the first user open the relationship establishment interface.

In one implementation of the present disclosure, the relationship establishment interface further includes a follow-back function control 32, where the follow-back function control is in a first state, which indicates that the follow-back function corresponding to the relationship establishment interface is in an on state; and the follow-back function control is in a second state, which indicates that the follow-back function corresponding to the relationship establishment interface is in an off state.

In one implementation of the present disclosure, as shown in FIG. 3a, the relationship establishment interface 30 includes a follow-back function control 32, and the follow-back function control 32 is in a first state where a check box corresponding to the "automatic follow-back" is a checked state as shown in FIG. 3a. The follow-back function control 32 is in the second state where the check box corresponding to the "automatic follow-back" as shown in FIG. 3b is in an unchecked state.

In one implementation of the present disclosure, when the check box corresponding to the "automatic follow-back" shown in FIG. 3a is in the check state, the follow-back function of the first user is in an on state, at this time, on the basis that the second user successfully follows the first user, the first user may automatically follow back the second user.

In one implementation of the present disclosure, when the check box corresponding to the "automatic follow-back" shown in FIG. 3b is in the unchecked state, the follow-back function of the first user is in an off state, at this time, on the basis that the second user successfully follows the first user, the first user cannot automatically follow back the second user.

In some embodiments, the state of the follow-back function control is set in the relationship establishment interface, and is used to indicate whether the follow-back function is enabled, so that the user can intuitively see the state of the follow-back function.

In one implementation of the present disclosure, when the follow-back function control is in the first state, the follow-back function corresponding to the relationship establishment interface is turned off, in response to the operation on the follow-back function control.

In one implementation of the present disclosure, when the follow-back function control is in the first state, that is, the check box corresponding to the "automatic follow-back" as shown in FIG. 3a is in the check state, the follow-back function of the first user is in the on state. At this time, in response to receiving the trigger of the first user for the check box, the check box is set to the unchecked state, that is, the follow-back function corresponding to the relationship establishment interface is turned off.

In one implementation of the present disclosure, when the follow-back function control is in the second state, the follow-back function corresponding to the relationship establishment interface is turned on, in response to the operation for the follow-back function control.

In one implementation of the present disclosure, when the follow-back function control is in the second state, that is, the check box corresponding to the "automatic follow-back" as shown in FIG. 3b is in the unchecked state, the follow-back function of the first user is in the off state. At this time, in response to receiving the trigger of the first user for the check box, the check box is set to the check state, that is, the follow-back function corresponding to the relationship establishment interface is turned on.

In one implementation of the present disclosure, in the scanning follow-back scenario, when the first user sets the check box corresponding to the "automatic follow-back" as the check state, it is determined that the follow-back function corresponding to the first user is in the on state, and after the second user scans the QR code of the first user and successfully follows the first user, the first user automatically follows back the second user.

In one implementation of the present disclosure, in the scanning follow-back scenario, when the first user sets the check box corresponding to the "automatic follow-back" to the unchecked state, it is determined that the follow-back function corresponding to the first user is in the off state, and after the second user scans the QR code of the first user and follows the first user, the first user cannot automatically follow back the second user.

In some embodiments, the user may freely set the state of the follow-back function in the relationship establishment interface by means of manual triggering.

In one implementation of the present disclosure, when the follow-back function control is in the first state, a first prompt message is displayed in the relationship establishment interface, where the first prompt message is used to prompt the first user to turn off the follow-back function.

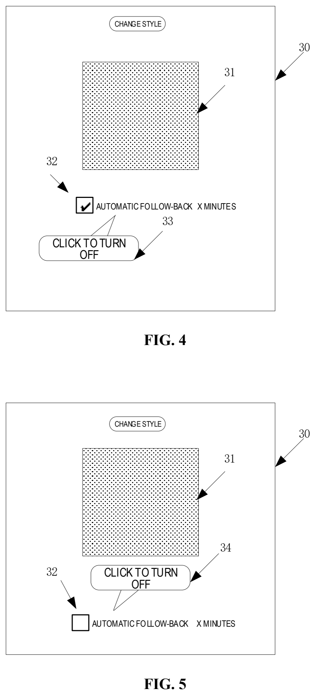

In some embodiments, as shown in FIG. 4, in the scanning follow-back scenario, the check box corresponding to the "automatic follow-back" in the relationship establishment interface is set to the check state, at this time, the first prompt box 33 is displayed in the relationship establishment interface 30, the first prompt message is displayed in the first prompt box 33, and the first message is used to prompt the first user to click the check box corresponding to the "automatic follow-back" to turn of the follow-back function.

In one implementation of the present disclosure, the predetermined follow-back condition includes a current display interface of the first user is the relationship establishment interface.

In some embodiments, the current display interface of the first user is the relationship establishment interface. In other words, the current display interface of the client of the first user is the relationship establishment interface 30 as shown in FIG. 3a.

In one implementation of the present disclosure, if the current display interface of the first user is the relationship establishment interface, after the second user may follows the first user by scanning the identification pattern in the current display interface of the first user, the first user can automatically follow back the second user. If the second user follows the first user by scanning the identification pattern of the first user, but the current display interface of the first user is not the relationship establishment interface, at this time, the first user does not follow back the second user, and the first user and the second user only maintain the first association relationship.

In one implementation of the present disclosure, the current display interface of the first user is the relationship establishment interface, which indicates that if the first user and the second user are in a face-to-face scanning identification pattern, and the second follows the first user, the second user scans the identification pattern of the first user, the second user will follow back the first user.

In one implementation of the present disclosure, the predetermined follow-back condition being satisfied further includes: determining that the second user established the first association relationship with the first user by scanning the identification pattern of the first user. It may be understood that the server may determine, based on the following request of the second user, whether the second user achieves the following by code scanning.

In one implementation of the present disclosure, the second user follows the first user by clicking the following button of the first user on the line. When the second user follows the first user, it may be the case that it is not a face-to-face code scanning with the second user. In this case, the first user does not follow back the second user.

In some embodiments, it is defined that the first user follows back the second user only after the second user establishes the first association relationship by scanning the identification pattern of the first user. If the second user follows the first user in other manners, the first user does not follow back the second user after establishing the first association relationship. In this way, the accuracy of automatic follow-back of the first user can be improved.

S103: In response to determining that a predetermined follow-back condition is satisfied, triggering an establishment of a second association relationship between the first user and the second user, where the predetermined follow-back condition being satisfied includes: a follow-back function corresponding to the relationship establishment interface being in an on state, and/or a current displaying interface of the first user being the relationship establishment interface.

In some embodiments, determining whether the predetermined follow-back condition being satisfied includes: determining whether the current display interface of the first user is the relationship establishment interface, and determining whether the follow-back function corresponding to the relationship establishment interface is in an on state.

In one implementation of the present disclosure, if the current display interface of the first user is the relationship establishment interface and/or the follow-back function in the relationship establishment interface is in the on state, it is determined that the predetermined follow-back condition is satisfied.

In one implementation of the present disclosure, the second association relationship may be understood as that the first user successfully follows back the second user, and after the first association relationship and the second association relationship are established, the first user and the second user are in a mutual following relationship.

In one implementation of the present disclosure, if the predetermined follow-back condition is satisfied, the first user sends a second association relationship establishment request to the application server. The second association relationship establishment request is used to indicate that the first user establishes the second association relationship with the second user. After receiving the second association relationship establishment request, the application server establishes a second association relationship between the first user and the second user, and returns a second association relationship establishment notification to the first user and the second user. The second association relationship establishment notification is used to indicate that the second association relationship between the first user and the second user has been established.

Embodiments of the present disclosure provide a method for association relationship establishment. The method includes displaying a relationship establishment interface, where the relationship establishment interface includes an identification pattern of a first user for a second user to scan to establish a first association relationship between the second user and the first user; in response to determining that an establishment of the first association relationship between the second user and the first user is complemented by the second user, determining whether a predetermined follow-back condition is satisfied; and in response to determining that the predetermined follow-back condition is satisfied, triggering to establish a second association relationship between the first user and the second user, where the predetermined follow-back condition being satisfied includes: a follow-back function corresponding to the relationship establishment interface being in an on state, and/or a current displaying interface of the first user being the relationship establishment interface. According to technical schemes of embodiments of the present disclosure, under the condition that the second user follows the first user by code scanning and the follow-back condition is satisfied, the first user follows back the second user. That is, if the condition is satisfied, the first user automatically follows back the second user, thereby avoiding the need for the first user to manually follow back the second user, reducing the follow-back operation process and improving the follow-back efficiency.

On the basis of above embodiments, in embodiments of the present disclosure, further optimization is performed on the predetermined follow-back condition, and the optimized predetermined follow-back condition further includes: satisfying a predetermined time condition.

In one implementation of the present disclosure, satisfying the predetermined time condition includes: a generation duration of the identification pattern of the first user included in the relationship establishment interface is less than a first predetermined duration.

In some embodiments, the generation duration of the identification pattern of the first user may be understood as a time interval between a generation time point of the identification pattern of the first user and a scan point when the second user scans the identification pattern. The first predetermined duration may be set based on practical conditions, for example, the first predetermined duration may be 24 hours.

In one implementation of the present disclosure, when the first user generates the corresponding identification pattern, the generation time point of the identification pattern is carried in in the identification pattern. When the second user scans the identification pattern of the first user and establishes the first association relationship with the first user, the first user analyzes the generation time point of the identification pattern, calculates the generation duration of the identification pattern based on the scanning time point when the second user scans the identification pattern. The first user establishes a second association relationship between the first user and the second user, if the generation duration of the identification pattern is less than the first predetermined duration, that is, the first user automatically follows back the second user. If the generation duration of the identification pattern is greater than the first predetermined duration, the second association relationship between the first user and the second user is not established, that is, the first user does not automatically follow back the second user.

In one implementation of the present disclosure, satisfying the predetermined time condition includes: an on duration during which the follow-back function corresponding to the relationship establishment interface is in the on state is less than a second predetermined duration, where the first predetermined duration is greater than the second predetermined duration.

In one implementation of the present disclosure, a start time length of the follow-back function in the on state may be understood as a time interval between a start time point of the last enabling the follow-back function and a scan point when the second user scans the identification pattern.

In one implementation of the present disclosure, when the follow-back function control is in the first state, an association duration of the second predetermined duration is displayed in the relationship establishment interface, where the association duration is used to indicate that the follow-back function is turned off after an on duration of the follow-back function corresponding to the first user reaches the association duration.

In some embodiments, the association duration of the second predetermined duration may include a second duration, or may be a countdown associated with the second duration, for example, an on duration from turning on the follow-back control to the current time point and/or a difference between the second predetermined duration and the on duration.

In embodiments of the present disclosure, the association duration of the second predetermined duration is a countdown of the second duration, may be displayed in a form of a progress bar, or may be displayed in a digital form, which is not specifically limited in the embodiments of the present disclosure.

In some embodiments, the second duration of the association duration in the second predetermined duration is used as an example for illustration. As shown in FIG. 5, the association duration of the second predetermined duration is "X minutes", that is, after the user prompts that after the on duration of the follow-back function corresponding to the first user lasts for X minutes, the follow-back function will be closed.

Further, as shown in FIG. 5, the relationship establishment interface 30 further includes a fourth message prompt box, the fourth message prompt box is used to display a fourth message, the fourth message user prompts the first user that the automatic follow-back function has been turned off.

In one implementation of the present disclosure, enabling manners of the follow-back function mainly includes two kinds: a first enabling manner where in response to an instruction of opening the association relationship establishing interface, when the association relationship establishing interface is opened, it is default that the follow-back function is enabled, and at this time, the follow-back control corresponding to the follow-back function is in the first state; a second enabling manner where if the follow-back control corresponding to the follow-back function is in the second state, that is, the follow-back function is disabled, in response to the trigger for the follow-back control, the follow-back control corresponding to the follow-back function is set to the first state, and the follow-back function is enabled.

In one implementation of the present disclosure, disabling manner of the follow-back function mainly includes three kinds: a first disabling manner where in response to an instruction of closing the relationship establishment interface, the relation establishment interface is closed and the follow-back function is disabled; a second disabling manner where when the follow-back control corresponding to the follow-back function is in the first state, that is, the follow-back function is enabled, the follow-back control corresponding to the follow-back function is set to the second state, and the follow-back function is disabled; a third disabling manner where after the on duration of the follow-back function corresponding to the first user reaches the associated duration, the follow-back function is disabled.

In one implementation of the present disclosure, in response to an instruction of opening the relationship establishment interface, it is obtained that when the relationship establishment interface is closed most recently, the user manually operates the state of the follow-back function. The state of the follow-back function manually operated by the user when the relationship establishment interface is closed last time is set as the state of the follow-back function when the relationship establishment interface is opened. Specifically, if the follow-back function is in an on state when the relationship establishment interface is most recently closed, and in response to receiving a trigger of the follow-back control being enabled, the follow-back function is the on state when the relationship establishment interface is reopen. If the follow-back function is in an off state when the relationship establishment interface is most recently closed, and in response to receiving a trigger of the follow-back control being disabled, the follow-back function is an off state.

In one implementation of the present disclosure, if the follow-up function is in the off state when the relationship establishment interface is most recently closed, and the on duration of the first identification pattern reaches the associated duration, the follow-back function is in a default state when the relation establishment interface is reopen, that is, the follow-back function is the on state.

On the basis of above embodiments, establishing the second association relationship between the first user and the second user further needs to be determined according to a user attribute of the second user, and the manner of establishing the second association relationship between the first user and the second user is further limited in embodiments of the present disclosure.

In one implementation of the present disclosure, the establishing the second association relationship between the first user and the second user includes: when the user attribute of the second user is a setting attribute, a second prompt message is displayed in the relationship establishment interface, where the second prompt message is used to prompt that the establishment of the first association relationship between the second user and the first user is completed, the first user has sent a follow-back request to the second user, and the follow-back request is used to establish the second association relationship between the first user and the second user after the second user confirms.

In one implementation of the present disclosure, the user attribute may be understood as an attribute of the visible permission of the post information set by the user. The user attribute of the second user is a setting attribute, which may be understood that the user attribute of the second user is that the post content is only disclosed for users of a predetermined range, and is used to ensure the privacy of the second user information, for example, the post information of the second user is only disclosed for users that are follower of the second user. Further, when the user attribute of the second user is a setting attribute, the process of the first user following back the second user is that the first user sends a follow-back request to the second user, and after receiving an accepted operation for the follow-back request by the second user, the first user can successfully follow back the second user. When the user attribute of the first user is a setting attribute, the first user establishes the first association relationship after accepting the following request sent by the second user, and automatically follows back the second user in response to determining that the predetermined follow-back condition is satisfied.

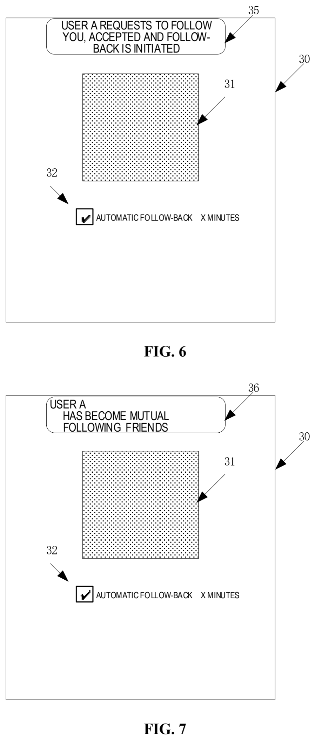

In one implementation of the present disclosure, as shown in FIG. 6, when the user attributes of the first user and the second user are both setting attributes, after the first user agrees to establish the first association relationship, the second message prompt box 35 is displayed in the relationship establishment interface 30 of the first user in response to determining that the predetermined follow-back condition is satisfied, the second message prompt box 35 is used to display the second message, as shown in FIG. 6, the second message may be that the user A requests to follow your, has passed, and accepted and the follow-back is initiated. In other words, the second message is used to notify the first user that the second user requests to follow the first user, and if the predetermined follow-back condition is satisfied, the first user initiates a follow-back request, but because the user attribute of the second user is a setting attribute, the first user can successfully follow back the second user after the second user accepts the follow-back request.

In one implementation of the present disclosure, the establishing the second association relationship between the first user and the second user includes: if the user attribute of the second user is a non-setting attribute, a fourth prompt message is displayed in the relationship establishment interface, where the fourth prompt message is used to prompt that the establishment of the second association relationship between the first user and the second user is completed.

In one implementation of the present disclosure, the user attribute of the second user is a non-setting attribute, which may be understood as that the user attribute of the second user is a non-private user. Further, when the user attribute of the second user is a non-setting attribute, the process of the first user following back the second user is that the first user sends a follow-back request to the second user, the second user automatically agrees to the follow-back request of the first user, the first user successfully follows back the second user, and the second user does not need to operate.

In one implementation of the present disclosure, as shown in FIG. 7, when the user attribute of the second user is a non-setting attribute, a third message prompt box 36 is displayed in the relationship establishment interface 30, the third message prompt box 36 is used to display a third message, as shown in FIG. 7, the third message may include: the user A has become mutual following friends. In other words, the third message is used to notify the first user that the second user requests to follow the first user, and the first user accept the following request of the second user, and if the predetermined follow-back condition is satisfied, the first user initiates a follow-back request, the second user automatically agrees to the follow-back request of the first user, and the first user successfully follows back the second user.

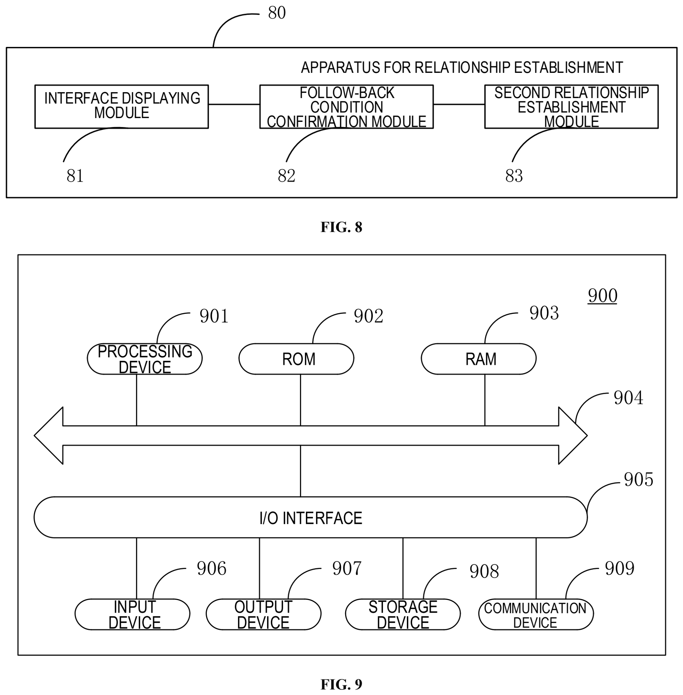

FIG. 8 is a schematic structural diagram of an apparatus for establishing an association relationship according to embodiments of the present disclosure. Embodiments of the present disclosure can be implemented in a scenario of establishing the association relationship by face-to-face scanning, the apparatus for establishing the association relationship may be implemented using software and/or hardware.

As shown in FIG. 8, the apparatus for establishing the association relationship according to embodiments of the present disclosure mainly includes an interface displaying module 81, a follow-back condition confirmation module 82, and a second association relationship establishment module 83.

The interface displaying module 81 is configured to display a relationship establishment interface, where the relationship establishment interface includes an identification pattern of a first user, and the identification pattern is used by a second user to scan to establish a first association relationship between the second user and the first user; a follow-back condition confirmation module 82 is configured to, in response to determining that an establishment of the first association relationship between the second user and the first user completed by the second user, determine whether a predetermined follow-back condition is satisfied; and a second association relationship establishment module 83 is configured to, in response to determining that the predetermined follow-back condition is satisfied, trigger to establish a second association relationship between the first user and the second user, where the predetermined follow-back condition includes: a follow-back function corresponding to the relationship establishment interface being in an on state, and/or a current displaying interface of the first user being the relationship establishment interface.

In one implementation of the present disclosure, the predetermined follow-back condition being satisfied further comprises: a predetermined time condition being satisfied.

In one implementation of the present disclosure, the predetermined time condition being satisfied includes: a generation duration of the identification pattern of the first user comprised in the relationship establishment interface being less than a first predetermined duration; and/or an on duration during which the follow-back function corresponding to the relationship establishment interface is in an on state being less than a second predetermined duration, wherein the first predetermined duration is greater than the second predetermined duration.

In one implementation of the present disclosure, the predetermined follow-back condition being satisfied further includes determining that the second user establishes the first association relationship between the second user and the first user by scanning the identification pattern of the first user.

In one implementation of the present disclosure, the relationship establishment interface further includes a follow-back function control, where the follow-back function control being in a first state indicates that a follow-back function corresponding to the relationship establishment interface is in an on state; and the follow-back function control being in a second state indicates that the follow-back function corresponding to the relationship establishment interface is in an off state.

In one implementation of the present disclosure, the apparatus further includes: a follow-back function turning off module configured to, when the follow-back function control is in the first state, turn off the follow-back function corresponding to the relationship establishment interface in response to an operation for the follow-back function control; and a follow-back turning on function module configured to, when the follow-back function control is in the second state, turn on the follow-back function corresponding to the relationship establishment interface in response to the operation on the follow-back function control.

In one implementation of the present disclosure, in response to the follow-back function control is in the first state, a first prompt message is displayed in the relationship establishment interface, where the first prompt message is used to prompt the first user to turn off the follow-back function.

In one implementation of the present disclosure, in response to the follow-back function control being in the first state, an association duration of a second predetermined duration is displayed in the relationship establishment interface, where the association duration is used to prompt that a follow-back function is to be turned off after an on duration of the follow-back function corresponding to the first user reaches the association duration.

In one implementation of the present disclosure, the second association relationship establishing module 83 is specifically configured to display a second prompt message in the relationship establishment interface in response to a user attribute of the second user is a setting attribute, where the second prompt message is used to prompt that the establishment of the first association relationship between the second user and the first user is completed, the first user has sent a follow-back request to the second user for establishing the second association relationship between the first user and the second user after the second user confirms.

In one implementation of the present disclosure, the second association relationship establishing module 83 is specifically configured to display a third prompt message in the relationship establishment interface in response to the user attribute of the second user is a non-setting attribute, where the third prompt message is used to prompt that the establishment of the second association relationship between the first user and the second user is completed.

The apparatus for establishing the association relationship provided by embodiments of the present disclosure may perform steps performed in the method for establishing the association relationship provided by method embodiments of the present disclosure, and has the following steps and beneficial effects, and details are not described herein again.

FIG. 9 is a schematic structural diagram of an electronic device according to an embodiment of the present disclosure. Reference is made to FIG. 9, which shows a schematic structural diagram of an electronic device 900 suitable for implementing embodiments of the present disclosure. The electronic device 900 in embodiments of the present disclosure may include, but is not limited to, a mobile terminal, such as, a mobile phone, a notebook computer, a digital broadcast receiver, a personal digital assistant (PDA), a PAD (tablet computer), a portable multimedia player ( PMP), an on-vehicle terminal (for example, an in-vehicle navigation terminal), a wearable terminal device, and the like, and a fixed terminal such as a digital TV, a desktop computer, a smart home device, or the like. The electronic device shown in FIG. 9 is merely an example and should not impose any limitation on the functions and scope of use of the embodiments of the present disclosure.

As shown in FIG. 9, the electronic device 900 may include a processing device (for example, a central processor, a graphics processor and the like) 901, which may execute various appropriate actions and processing according to a program stored in a read-only memory (ROM) 902 or a program loaded into a random access memory (RAM) 903 from a storage device 908 to implement the association relationship establishment method according to embodiments of the present disclosure. In the RAM 903, various programs and data required by operations of the terminal device 900 are also stored. The processing device 901, the ROM 902, and the RAM 903 are connected to each other through a bus 904. Input/output (I/O) interface 905 is also connected to the bus 904.

Generally, the following devices may be connected to the I/O interface 905: an input device 906 including, for example, a touch screen, a touchpad, a keyboard, a mouse, a camera, a microphone, an accelerometer, a gyroscope and the like; an output device 907 including, for example, a liquid crystal display (LCD), a speaker, a vibrator and the like; a storage device 908 including, for example, a magnetic tape, a hard disk and the like; and a communication device 909. The communication device 909 may allow the terminal device 900 to communicate wirelessly or wired with other devices to exchange data. Although FIG. 9 illustrates a terminal device 900 having various devices, it should be understood that all illustrated devices are not required to be implemented or provided. More or fewer devices may alternatively be implemented or provided.

In particular, according to embodiments of the present disclosure, the process described above with reference to the flowchart may be implemented as a computer software program. For example, embodiments of the present disclosure include a computer program product including a computer program carried on a non-transitory computer readable medium, the computer program including program code for performing the method shown in the flowchart to implement the method for establishing an association relationship as described above. In such embodiments, the computer program may be downloaded and installed from the network through the communication device 909, or installed from the storage device 908, or from the ROM 902. When the computer program is executed by the processing apparatus 901, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

In some implementations, the client, server may communicate using any currently known or future developed network protocol, such as HTTP (HyperText Transfer Protocol), and may be interconnected with any form or medium of digital data communication (e.g., a communication network). Examples of communication networks include local area networks ("LANs"), wide area networks ( "WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer readable medium carries one or more programs, and when the one or more programs are executed by the terminal device, the terminal device is caused to: display a relationship establishment interface, where the relationship establishment interface includes an identification pattern of a first user for a second user to scan to establish a first association relationship between the second user and the first user; in response to determining that an establishment operation of a first association relationship between the second user and the first user is completed by the second user, determine whether a predetermined follow-back condition is satisfied; and in response to determining that the predetermined follow-back condition is satisfied, trigger to establish a second association relationship between the first user and the second user, where the predetermined follow-back condition being satisfied includes: a follow-back function corresponding to the relationship establishment interface being in an on state, and/or a current displaying interface of the first user being the relationship establishment interface.

Optionally, when the one or more programs are executed by the terminal device, the terminal device may further perform other steps described in the foregoing embodiments.

Computer program code for performing the operations of the present disclosure may be written in one or more programming languages, including, but not limited to, object-oriented programming languages such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and / or flowcharts, as well as combinations of blocks in the block diagrams and / or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of the unit does not constitute a limitation on the unit itself in some cases.

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

The above description is merely an illustration of the preferred embodiments of the present disclosure and the principles of the application. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be done to require those operations to be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and / or methodological acts, it is to be understood that the subject matter defined in the appended claims is not necessarily limited to the specific features or acts described above. Rather, the specific features and acts described above are merely exemplary forms of implementing the claims.

## Claims

1. A method for association relationship establishment, implemented at a first user side, comprising:
displaying a relationship establishment interface, wherein the relationship establishment interface comprises an identification pattern of a first user for a second user to scan to establish a first association relationship between the second user and the first user;
in response to determining that an establishment of the first association relationship between the second user and the first user is complemented by the second user, determining whether a predetermined follow-back condition is satisfied; and
in response to determining that the predetermined follow-back condition is satisfied, triggering to establish a second association relationship between the first user and the second user, wherein the predetermined follow-back condition being satisfied comprises: a follow-back function corresponding to the relationship establishment interface being in an on state, and/or a current displaying interface of the first user being the relationship establishment interface.

2. The method of claim 1, wherein the predetermined follow-back condition being satisfied further comprises: a predetermined time condition being satisfied.

3. The method of claim 2, wherein the predetermined time condition being satisfied comprises:
a generation duration of the identification pattern of the first user comprised in the relationship establishment interface being less than a first predetermined duration; and/or
an on duration during which the follow-back function corresponding to the relationship establishment interface is in an on state being less than a second predetermined duration, wherein the first predetermined duration is greater than the second predetermined duration.

4. The method of claim 1, wherein the predetermined time condition being satisfied further comprises: determining that the second user establishes the first association relationship between the second user and the first user by scanning the identification pattern of the first user.

5. The method of claim 1, wherein the relationship establishment interface further comprises a follow-back function control,
wherein the follow-back function control being in a first state indicates that a follow-back function corresponding to the relationship establishment interface is in an on state, and
the follow-back function control being in a second state indicates that the follow-back function corresponding to the relationship establishment interface is in an off state.

6. The method of claim 5, further comprising:
in response to an operation for the follow-back function control that is in the first state, turning off the follow-back function corresponding to the relationship establishment interface; and/or
in response to an operation for the follow-back function control that is in the second state, turning on the follow-back function corresponding to the relationship establishment interface.

7. The method of claim 5, wherein a first prompt message is displayed in the relationship establishment interface in response to the follow-back function control being in the first state, and
wherein the first prompt message is used to prompt the first user to turn off the follow-back function .

8. The method of claim 5, wherein an association duration of a second predetermined duration is displayed in the relationship establishment interface in response to the follow-back function control being in the first state, and
wherein the association duration is used to prompt that a follow-back function is to be turned off after an on duration of the follow-back function corresponding to the first user reaches the association duration.

9. The method of claim 1, wherein establishing the second association relationship between the first user and the second user comprises:
in response to that a user attribute of the second user is a setting attribute, displaying a second prompt message in the relationship establishment interface, wherein the second prompt message is used to prompt that the establishment of the first association relationship between the second user and the first user is completed, and the first user has sent, to the second user, a follow-back request for establishing the second association relationship between the first user and the second user after the second user confirms.

10. The method of claim 1, wherein establishing the second association relationship between the first user and the second user comprises:
in response to that a user attribute of the second user is a non-set attribute, displaying a third prompt message in the relationship establishment interface, wherein the third prompt message is used to prompt that the establishment of the second association relationship between the first user and the second user is completed.

11. An apparatus for association relationship establishment configured on a first user side, comprising:
an interface displaying module configured to display a relationship establishment interface, wherein the relationship establishment interface comprises an identification pattern of a first user for a second user to scan to establish a first association relationship between the second user and the first user;
a follow-back condition confirmation module configured to in response to determining that an establishment of the first association relationship between the second user and the first user is completed by the second user, determine whether a predetermined follow-back condition is satisfied;
a second association relationship establishment module configured to trigger to establish a second association relationship between the first user and the second user in response to determining that the predetermined follow-back condition is satisfied, wherein the predetermined follow-back condition being satisfied comprises: a follow-back function corresponding to the relationship establishment interface being in an on state, and/or a current displaying interface of the first user being the relationship establishment interface.

12. An electronic device, comprising:
one or more processors;
a storage device, configured to store one or more programs;
when the one or more programs are executed by the one or more processors, the one or more processors implement an association relationship establishment method according to any one of claims 1-10.

13. A computer-readable storage medium having stored a computer program thereon, wherein the computer program, when executed by a processor, implements the association relationship establishment method according to any one of claims 1-10.

14. A computer program product, comprising a computer program or an instruction, wherein when the computer program or instruction is executed by a processor, the method for association relationship establishment according to any one of claims 1-10 is implemented.
